# EUROPEAN PATENT APPLICATION

(11) **EP 1 400 827 A1**
(43) Date of publication of application: **24.03.2004**
(21) Application number: 03254158.3
(22) Date of filing: 30.06.2003
(51) Int. Cl.: G02B 13/16, G02B 13/18, G02B 3/04

(54) **Aspherical lens and video projector**

(30) Priority: 17.09.2002 RU 2002124710
(71) Applicant: SAMSUNG ELECTRONICS CO., LTD., Suwon-City, Kyungki-do (KR)
(72) Inventor: Yoon, Seok-il, Daejeon Maetropolitan-City (KR); Hwang, Gyu-hwan, Taean-eup, Hwaseong-gun Gyeonggi-do (KR); Shirankov, AleksandrF., Pushkino, 141200 (RU); Rozhkov, Oleg V., 122 Moscow, 139164 (RU); Pozdnyakov, Vadim V., 11 Moscow region, Fryazino 141195 (RU); Khorokhorov, Aleksei M., Moscow, 115470 (RU)
(74) Representative: Geary, Stuart Lloyd

(57) **Abstract**

Provided are a hybrid lens (31) and a projection optical system (30) having the hybrid lens (31). The projection optical system (30) includes a hybrid lens (31) that is positioned along an optical path between a fluorescent surface and a screen onto which light emitted from the fluorescent surface is projected to form an image and includes a spherical lens (33) and an aspherical lens (35a,35b) formed of plastic on at least one surface of the spherical lens (33). Accordingly, aberration can be corrected to improve image quality.

## Description

The present invention relates to a hybrid lens and a video projector.

Focusing performance is very important in a known projection TV optical system, which projects an image formed on the face of a Braun tube (CRT; Cathode Ray Tube) onto a screen. For focusing, the projection optical system uses an aspherical plastic lens capable of compensating for aberration. However, the refractive index, shape and focal length of the aspherical plastic lens vary with changes in temperature, which degrades the focusing performance. Various techniques for solving this problem are disclosed in WO-A-9834134, US-A-5272540 and US-A-4924244.

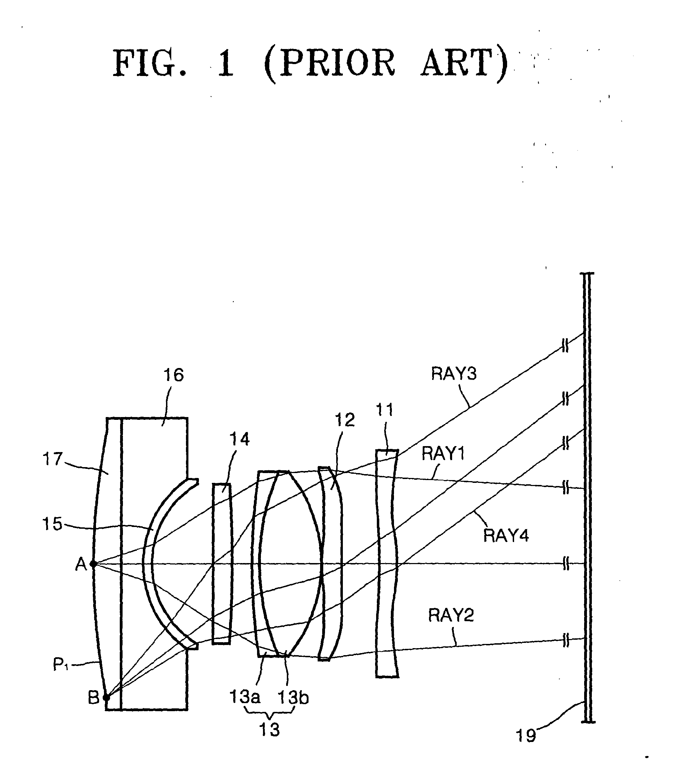

Figure 1 is a cross-sectional view of a projection optical system disclosed in US-A-5309283. Reference numerals 11, 12, 13, 14 and 15 denote first, second, third, fourth and fifth group lenses respectively. The third group lens 13 is composed of a pair of glass lenses 13a, 13b. Reference numeral 16 denotes a cooling liquid, reference numeral 17 denotes a protective lens that covers a fluorescent surface P₁ of a CRT and reference numeral 19 denotes a screen. Referring to Figure 1, RAY1 denotes an upper limit and RAY2 denotes a lower limit of light rays emitted from a centre point **A** of the face P₁ of the CRT. RAY3 denotes an upper limit and RAY4 denotes a lower limit of light rays emitted from an object point **B** in the periphery of an image plane.

The first and second group lenses 11, 12 are aspherical plastic lenses positioned on an optical axis to provide a weak, positive refractive index. In order to reduce the focus drift with temperature, the first group lens 11 is made concave and disposed adjacent to the screen 19, the second group lens 12 is made convex and disposed behind the first group lens 11 and the refractive indices of the first and second group lenses 11, 12 are substantially the same. The third group lens 13 is formed by bonding a pair of glass lenses and is disposed immediately behind the second group lens 12.

However, it is costly to manufacture groups of lenses in the prior art projection optical system as disclosed in US-A-5272540 and image quality is degraded.

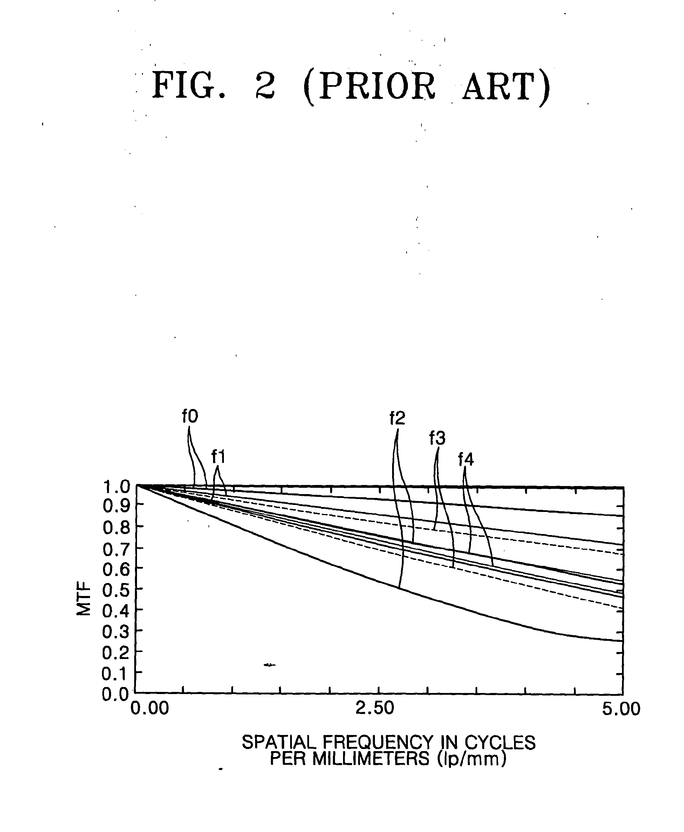

Figure 2 is a graph of modulation transfer function (MTF) against spatial frequency in cycles per millimeter when a general aspherical lens is used. Here, the MTF is defined by Equation 1 in terms of the maximum intensity (Max) and the minimum intensity (Min) of light. When the MTF is 1, resolution is optimal. Resolution decreases with a reduction in the MTF.$\text{MTF} \text{=} \frac{\text{Max - Min}}{\text{Max + Min}}$

Referring to Figure 2, f0 represents the case where an image height h (which refers to the distance from a point "O", where the optical axis meets the image plane, to an image) is zero, f1 represents the case where the image height h is 20mm, f2 represents the case where the image height h is 40mm, f2 represents the case where the image height **h** is 60mm and f4 represents the case the image height h is 63.50mm. Regardless of the variation in the spatial frequency, the MTF is the highest when the image height h is zero (f0) and the lowest when the image height h is 40mm (f2). However, as can be seen from f0, f1, f2, f3 and f4, the MTF sharply decreases with increasing spatial frequency. As the MTF decreases, the contrast of an image formed by the projection optical system reduces.

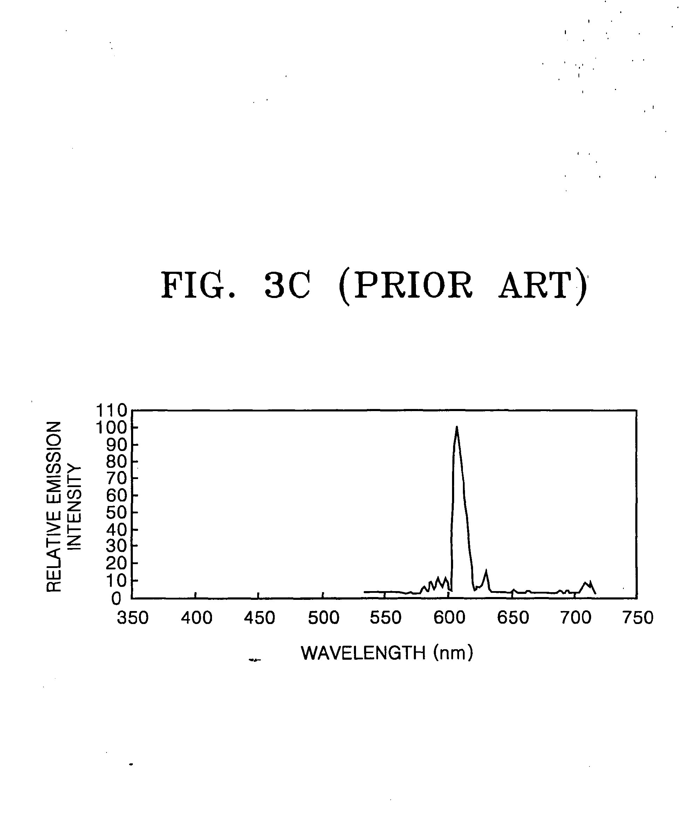

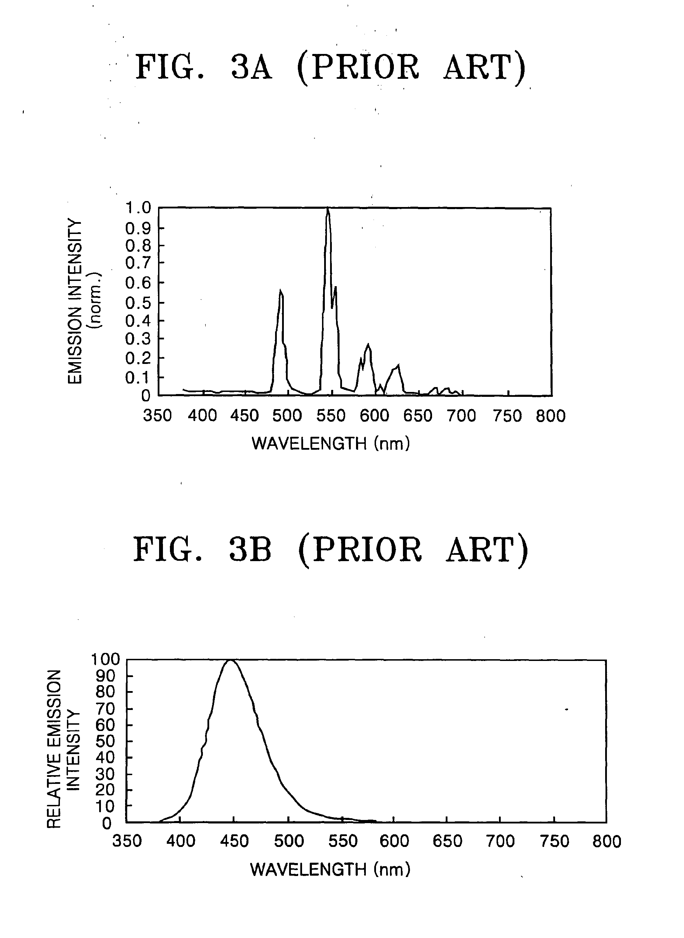

Figures 3A through 3C respectively illustrate the emission spectra of CRTs emitting green, blue and red light. Referring to Figure 3A, the emission intensity of green light has a primary peak at a wavelength of 550nm, a secondary peak at a wavelength of 490nm and is weak at other wavelengths. Referring to Figure 3B, the emission intensity of blue light peaks at a wavelength of 450nm and falls off within a wavelength range of 400 - 500nm. Referring to Figure 3C, the emission intensity of red light peaks at a wavelength of 620nm. Since the emission spectra of blue and red light overlap green light emission spectrum, the wavelengths of blue and red light, except the central wavelength of green light, are emitted in different wavelength bands, which results in chromatic aberration. Thus, an optical system capable of reducing the chromatic aberration is required.

The present invention provides a hybrid lens capable of correcting chromatic aberration and a projection optical system using the hybrid lens.

A hybrid lens according to the present invention is characterised by a spherical lens and a plastic aspherical lens on one face of the spherical lens.

Preferably, the hybrid lens has a plastic aspherical lens on the other face of the spherical lens also.

Preferably, the spherical lens is glass.

Preferably, the refractive index of the spherical lens differs from that of the or each aspherical lens. More preferably, the refractive index of the spherical lens is in the range 1.45 - 1.95 and the or each aspherical lens has a refractive index in the range 1.45 - 1.8.

Preferably, having an aspherical lens surface z defined by: 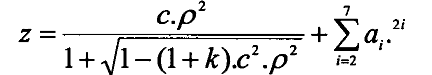 where c is the surface curvature (an inverse function of radius), 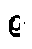 is the radial coordinates of an optical surface, **k** is a conic constant and α_{**i**} is a polynominal coefficient defining the deviation from a spherical surface.

A video projector according to the present invention comprises an optical system including a hybrid lens according to the present invention.

Embodiments of the present invention will now be described, by way of example, with reference to Figures 4A to 8 of the accompanying drawings, in which:-
Figure 1 is a cross-sectional view of a projection optical system disclosed in US-A-5272540;
Figure 2 is a graph of a modulation transfer function (MTF) versus spatial frequency in cycles per millimetre when a conventional aspherical plastic lens is used.
Figures 3A through 3C respectively illustrate the emission spectra of a CRT emitting green, blue and red light;
Figure 4A is a schematic cross-sectional view of an aspherical hybrid lens according to the present invention;
Figure 4B is a schematic cross-sectional view of another hybrid lens according to the present invention;
Figure 5 is a schematic cross-sectional view of a projection optical system according to the present invention;
Figure 6 is a table of the radii, thicknesses, refractive indices and numerical apertures of lenses used in the projection optical system shown in Figure 5;
Figure 7 is a table of aspherical coefficients used in the projection optical system shown in Figure 5; and
Figure 8 is a graph of the MTF of the projection optical system of Figure 5 versus spatial frequency in cycles per millimetre.

In the drawings, the thicknesses and sizes of lenses are exaggerated for clarity. Also, spherical and aspherical shapes of the lenses are to be taken as examples only.

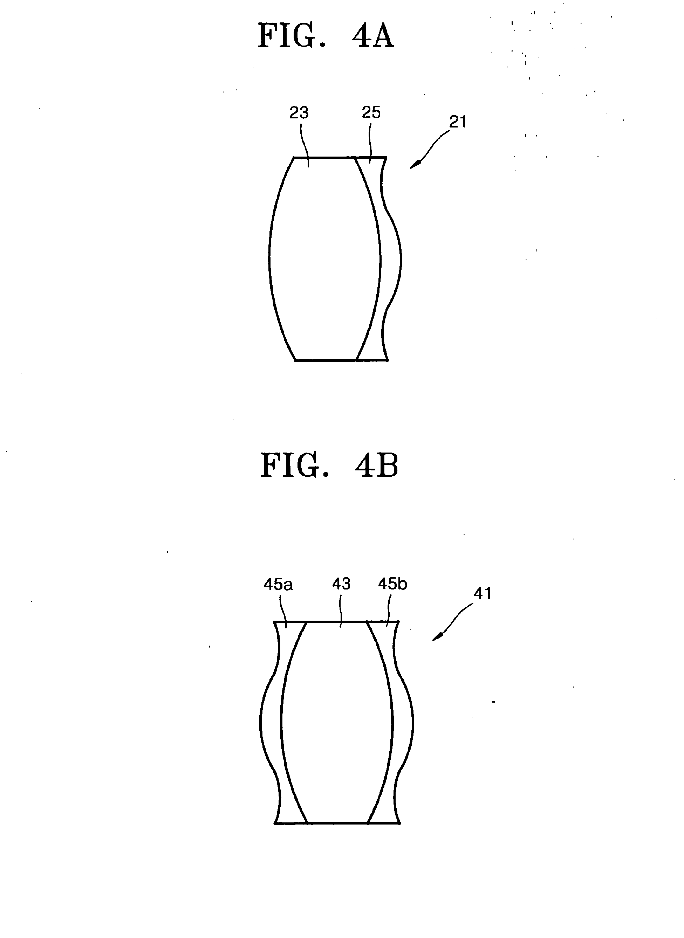

Referring to Figure 4A, an aspherical hybrid lens 21 includes a spherical lens 23 and an aspherical lens 25 on one or other of the faces of the spherical lens 23. A ratio of the occupied area of the aspherical lens 25 to the gross area depends on the area of illuminating incident light.

The spherical lens 23 is formed of glass and its refractive index is constant throughout. It is preferable that the refractive index of the glass is within a range of 1.45 - 1.95. The aspherical lens 25 is formed of plastic and has a refractive index that is constant throughout the lens and preferably different from the refractive index of the glass spherical lens 22. It is preferable that the refractive index of the plastic is within a range of 1.45 - 1.8.

Referring to Figure 4B, a hybrid lens 41 includes a spherical lens 43 and first and second aspherical lenses 45a, 45b on respective faces of the spherical lens 43.

Like the spherical lens 23 shown in Figure 4A, the spherical lens 43 is formed of glass and has a similar refractive index to the spherical lens 23. The first and second aspherical lenses 45a, 46b may be formed as a single lens on the surface of the spherical lens 43 or may be separately formed on the faces of the spherical lens 43. The refractive indices of the first and second aspherical lenses 45a, 45b are similar to the refractive index of the aspherical lens 25 shown in Figure 4A.

The refraction angles of spherical and aspherical lenses vary with wavelength, which results in chromatic aberration. As the wavelength of light passing through a spherical lens increases, the focal length of the spherical lens decreases. Thus, focal length is shortest for red light and longest for blue light. In contrast, as the wavelength of light passing through an aspherical lens increases, the focal length of the aspherical lens increases. Thus, focal length is shortest for blue light and longest for red light. A hybrid lens according to the present invention'is formed by combining a spherical lens and an aspherical lens so that the chromatic aberration of the two lenses compensate for each other. Thus, the hybrid lens has no chromatic aberration. Here, the refractive indexes and curvatures of the spherical lens and the aspherical lens must be adjusted appropriately to completely remove chromatic aberration in the hybrid lens. In particular, forming the spherical lens of glass and the aspherical lens of plastic is effective in removing chromatic aberration.

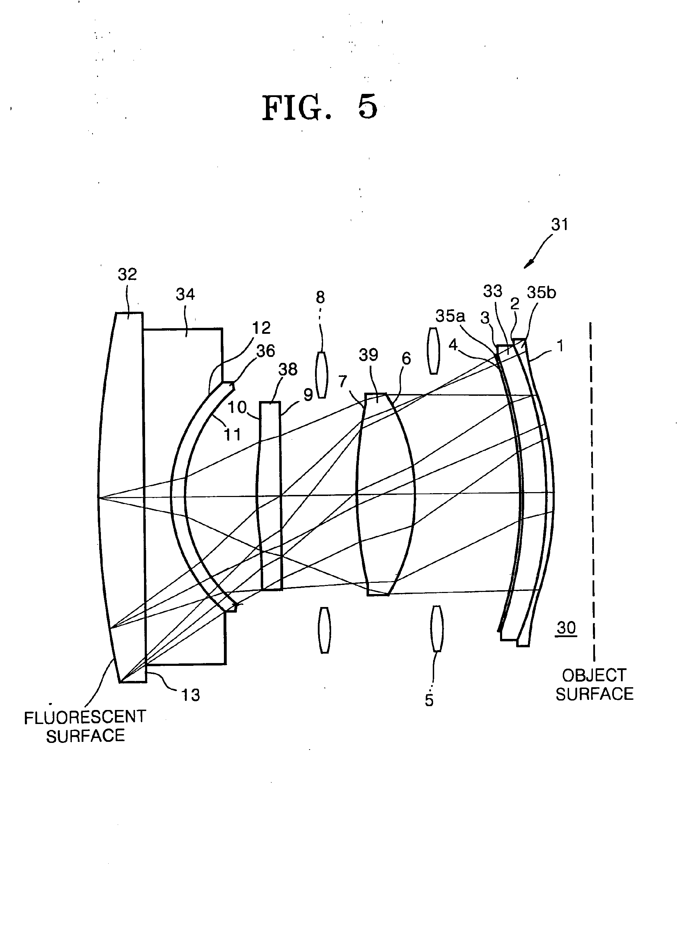

Referring to Figure 5, in a projection optical system 30, a protective lens 32, a meniscus lens 36, first and second power lenses 38, 39, and a hybrid lens 31 are sequentially arranged along the same optical axis. A cooling liquid 34 is provided between the protective lens 32 and the meniscus lens 36 and a hybrid lens 31 includes first and second aspherical lenses 35a, 36b which are formed on the surfaces of a spherical lens 33. The first and second aspherical lenses 35a, 35b can have different refractive indices and dispersions from the spherical lens 33 so as to correct aberration and have constant focusing power.

In the projection optical system 30, the hybrid lens 31 is positioned adjacent to an object surface. However, the meniscus lens 36 or the first and second power lenses 38, 39 can be replaced with hybrid lenses to reduce chromatic aberration. It is preferable that the hybrid lens 31, and the first and second lenses 38, 39 are power correction lenses. The first and second lenses 38, 39 have aspherical surfaces so as to compensate effectively for chromatic aberration.

The functions of the lenses, except the hybrid lens 31, and optical paths of light passing through the lenses will now be explained.

The protective lens 32 covers the face of a CRT and allows red, green or blue light emitted from the fluorescent surface of the CRT to proceed toward the inside of the projection optical system 30. Light that has passed through the protective lens 32 is refracted by the meniscus lens 36 and diverges after passing through the cooling liquid 34.

The meniscus lens 36 is a single lens element, both surfaces of which curve in the same direction. A convex meniscus lens has a central portion that is thicker than an outer portion. A concave meniscus lens has a central portion that is thinner than an outer portion. The light that has diverged after passing through the meniscus lens 36 is refracted by the first and second power lenses 38, 39 and then focused onto the hybrid lens 31. In this optical system, the light emitted from the bottom portion of the protective lens 32 proceeds toward the top portion of the hybrid lens 31.

The first and second aspherical lenses 35a, 35b of the hybrid lens 31 can have different refractive indices from the spherical lens 33 so as to serve as power lenses. Since a projection TV uses a monochromatic CRT, RGB colour signals are produced by the phosphors of the red, green, and blue CRTs and combined by the projection optical system 30 to form an image. Green light greatly affects image quality. Thus, the present invention proposes an aspherical hybrid lens formed by combining an aspherical lens and a spherical lens having different optical characteristics such as different refractive indexes and dispersions so as to correct aberration of each wavelength included in green light.

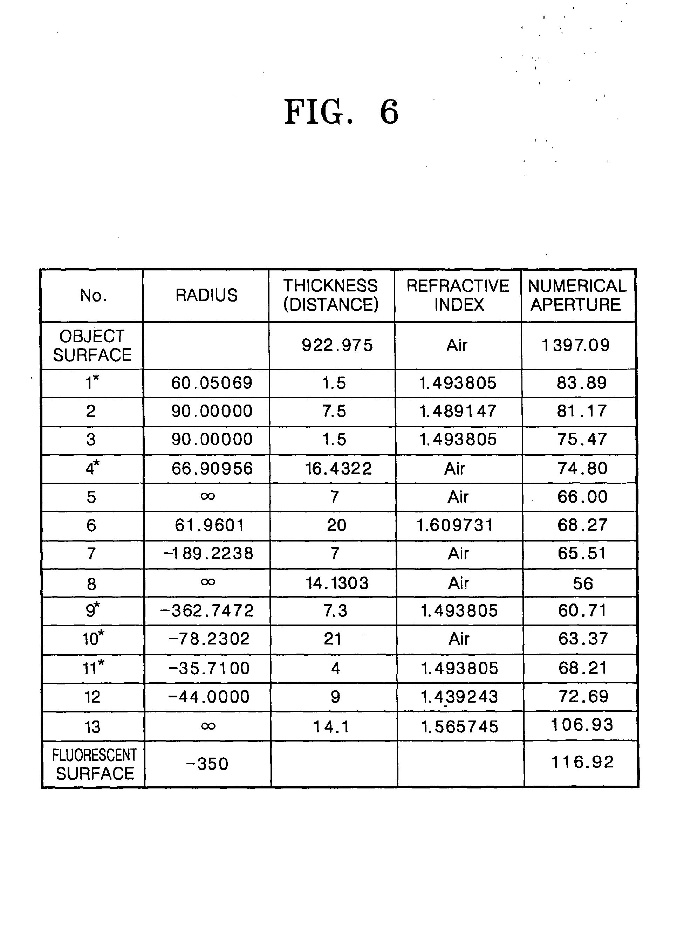

The table of Figure 6 shows design values for lenses used in a projection optical system according to the present invention, i.e., radii, thicknesses, refractive indices and numerical apertures.

Referring to Figure 6, reference numerals 1, 4, 9, 10 and 11 denote aspherical lens surfaces, reference numerals 2, 3, 6, 7 and 12 denote spherical lens surfaces, and reference numerals 5 and 8 denote aperture stop for removing unnecessary light. Equation 2 described above is the basic equation for designing the aspherical surfaces 1, 4, 9, 10, and 11. 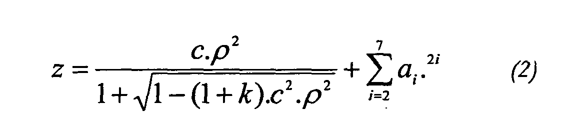 where, c is a surface curvature (an inverse function of a radius), 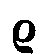 is the position on the optical surface in radial coordinates, **k** is a conic constant (k=0 in the current optical design), and α_{**i**} is a coefficient of a polynominal expression defining deviation from a spherical surface.

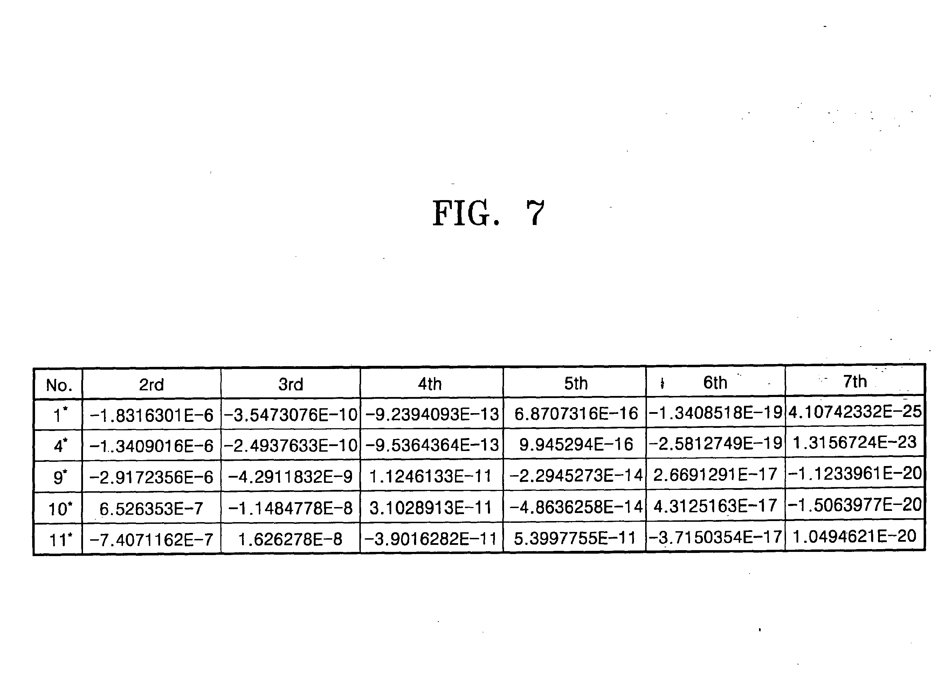

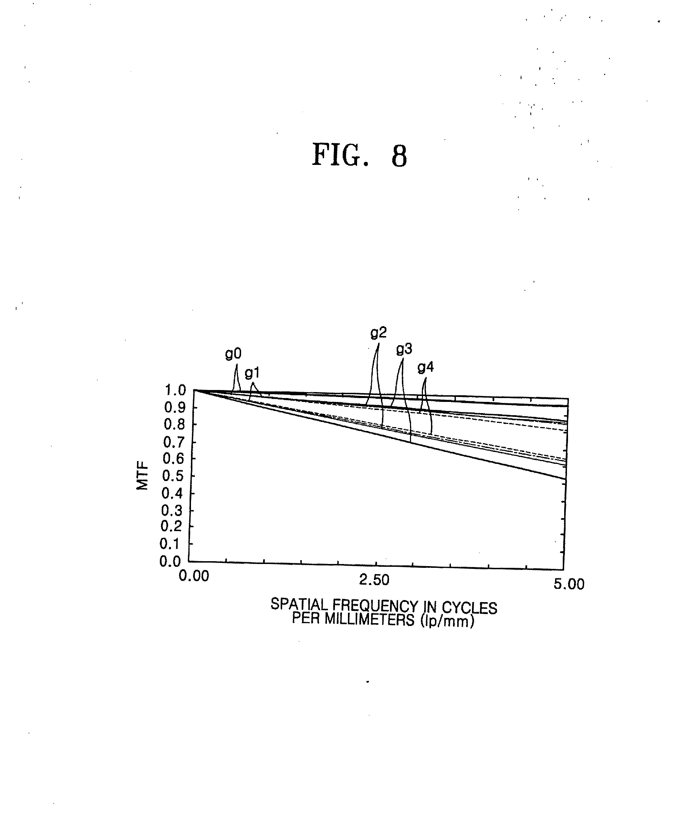

The table of Figure 7 shows the polynominal coefficient α_{**i**} (i= 2 - 7) of the aspherical surfaces 1, 4, 9, 10 and 11. Figure 8 illustrates the MTF measured using lenses having aspherical surfaces 1, 4, 9, 10 and 11 manufactured according to the set design values in the projection optical system shown in Figure 5.

Figure 8 is a graph of the MTF of the projection optical system of the present invention versus spatial frequency in cycles per millimetre. Here, g0 represents an image height of zero, g1 represents an image height of 20mm, g2 represents an image height of 40mm, g3 represents an image height of 60mm, and g4 represents an image height of 63.5mm. As can be seen in Figure 8, the MTF of the projection optical system of the present invention increases in each field compared to that of the projection optical system shown in Figure 2, and is above 0.5 at a spatial frequency of about 5Hz. Accordingly, the projection optical system according to the present invention can realize higher contrast and resolution than a projection optical system according to the prior art.

As described above, in the present invention, a hybrid lens, in which an aspherical lens is formed of plastic on the surface of a spherical lens formed of glass, is disposed in a projection optical system. Thus, chromatic aberration can be reduced so as to provide an image having high contrast and resolution.

While the present invention has been particularly shown and described with reference to exemplary embodiments thereof, it will be understood by those of ordinary skill in the art that various changes in form and details may be made.

## Claims

1. A hybrid lens **characterised by** a spherical lens (23; 43; 33) and a plastic aspherical lens (21; 45a; 35a) on one face of the spherical lens.

2. A hybrid lens according to claim 1, having a plastic aspherical lens (45b; 35b) on the other face of the spherical lens (43; 33),

3. A hybrid lens according to claim 1 or 2, wherein the spherical lens (23; 43; 33) is glass.

4. A hybrid lens according to claim 1, 2 or 3, wherein the refractive index of the spherical lens (23; 43; 33) differs from that of the or each aspherical lens (21; 45a, 45b; 35a, 35b).

5. A hybrid lens according to claim 4, wherein the refractive index of the spherical lens (23; 43; 33) is in the range 1.45 - 1.95 and the or each aspherical lens (21; 45a, 45b; 35a, 35b) has a refractive index in the range 1.45 - 1.8.

6. A hybrid lens according to any preceding claim, wherein having an aspherical lens surface z defined by: 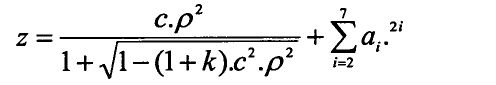 where c is the surface curvature (an inverse function of radius), 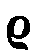 is the radial coordinates of an optical surface, **k** is a conic constant and **α**_{**i**} is a polynominal coefficient defining the deviation from a spherical surface.

7. A video projector comprising an optical system (30) including a hybrid lens (33) according to any preceding claim.

8. A hybrid lens comprising:
a spherical lens; and
an aspherical lens formed of plastic on at least one surface of the spherical lens.

9. The hybrid lens of claim 8, wherein the aspherical lens is formed on an incidence surface and an emission surface of the spherical lens.

10. The hybrid lens of claim 8, wherein the spherical lens is formed of glass.

11. The hybrid lens of claim 8, wherein the spherical lens has a refractive index within a range of 1.45 - 1.95.

12. The hybrid lens of claim 8, wherein the aspherical lens has a refractive index within a range of 1.45 - 1.8.

13. The hybrid lens of claim 8, wherein the spherical lens and the aspherical lens have different refractive indexes.

14. The hybrid lens of claim 8, wherein when c is a surface curvature (an inverse function of radius), 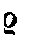 is radial coordinates on an optical surface, **k** is a conic constant, and **α**_{**i**} is a polynominal coefficient defining the deviation from a spherical surface, a lens surface z of the aspherical lens satisfies the equation below:

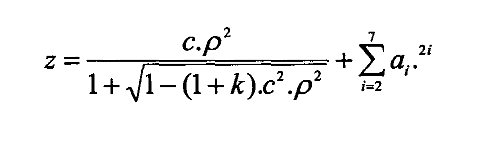

15. A projection optical system comprising a hybrid lens that is positioned along an optical path between a fluorescent surface and a screen onto which light emitted from the fluorescent surface is projected to form an image and includes a spherical lens and an aspherical lens formed of plastic on at least one surface of the spherical lens.

16. The projection optical system of claim 15, wherein the aspherical lens is formed on an incidence surface and an emission surface of the spherical lens.

17. The projection optical system of claim 15, wherein the spherical lens is formed of glass.

18. The projection optical system of claim 16, wherein the spherical lens has a refractive index within a range of 1.45 - 1.95.

19. The projection optical system of claim 15, wherein the aspherical lens has a refractive index within a range of 1.45 - 1.8.

20. The projection optical system of claim 15, wherein the spherical lens and the aspherical lens have different refractive indexes.

21. The projection optical system of claim 15, wherein when c is a surface curvature (an inverse function of radius), 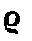 is radial coordinates on an optical surface, **k** is a conic constant, and **α**_{**i**} is a polynominal coefficient defining the deviation from a spherical surface, a lens surface **z** of the aspherical lens satisfies the equation below:

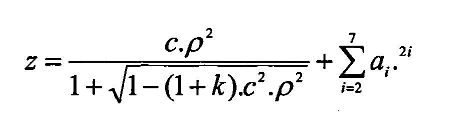

22. The projection optical system of claim 15, further comprising a protective lens that covers the entire fluorescent surface.

23. The projection optical system of claim 22, further comprising a meniscus lens that is positioned along an optical path between the protective lens and the hybrid lens.

24. The projection optical system of claim 23, further comprising a cooling liquid that is positioned between the protective lens and the meniscus lens.

25. The projection optical system of claim 15, wherein the hybrid lens is a correction power lens.

26. The projection optical system of claim 15, further comprising at least one correction power lens that is positioned between the hybrid lens and the fluorescent surface, and refracts incident light.

27. The projection optical system of claim 25, wherein the correction power lens has an aspherical surface.
